# DEMANDE DE BREVET EUROPEEN

(11) **EP 1 270 198 A1**
(43) Date de publication de la demande: **02.01.2003**
(21) Numéro de dépôt: 02291572.2
(22) Date de dépôt: 25.06.2002
(51) Int. Cl.: B32B 3/12, B32B 7/12, B32B 31/24, B29D 24/00

(54) **Ame de type nid d'abeilles, collable directement sur un parement externe, panneau composite comprenant ladite âme, et son procédé de fabrication**

(30) Priorité: 26.06.2001 FR 0108404
(71) Demandeur: Nidaplast-Honeycombs, 59224 Thiant (FR)
(72) Inventeur: Carmier, Jean, 78500 Sartrouville (FR); Tabot, Hugues, 14310 Parfouvu Sur Odon (FR); Filippi, Richard, 78000 Versailles (FR)
(74) Mandataire: Laget, Jean-Loup

(57) **Abrégé**

L'invention concerne une âme du type nid d'abeilles en polyoléfine, en particulier en polypropylène, destinée à accueillir par collage, sur au moins l'une de ses faces externes, un parement de finition.

L'invention consiste en ce que la dite âme est collable sur le parement de finition sans interposition d'un voile intermédiaire souple d'accrochage grâce à un traitement d'activation préalable d'au moins une face externe de l'âme, ladite face présentant une tension de surface supérieure ou égale à 40 dynes/cm².

Application aux panneaux de finition.

## Description

La présente invention concerne une âme du type nid d'abeilles en polypropylène ou autre polyoléfine, collable directement sur au moins un parement externe sans interposition d'un voile d'accrochage. Elle concerne également un panneau composite ou sandwich réalisé à partir de cette âme en nid d'abeilles, ainsi qu'un procédé de fabrication d'un tel panneau.

Les âmes en nid d'abeilles en polyoléfine, en particulier en polypropylène, offrent des avantages techniques et économiques certains par rapport aux autres solutions utilisées pour la réalisation de panneaux composites ou sandwichs composés d'une âme revêtue sur au moins une de ses faces externes d'un parement fonctionnel et/ou décoratif.

On connaît ainsi par le document DE-A-41 11 638 un procédé de fabrication d'une plaque multicouche par pressage d'une couche noyau, de préférence à structure en nid d'abeilles, d'une couche de revêtement en matière thermoplastique et au moins d'une couche de colle en résine thermodurcissable. La couche de revêtement est activée soit par traitement corona soit par l'apport d'une couche intermédiaire avant le pressage.

Cependant, l'impossibilité de collage des polyoléfines, et plus particulièrement du polypropylène, complique l'utilisation de telles âmes pour former des panneaux.

Les panneaux sandwichs connus comportant une telle âme sont actuellement fabriqués en thermosoudant, sur chaque face de l'âme en nid d'abeilles, un voile intermédiaire souple, en général en non-tissé. Ce voile sert alors de surface de collage pour le parement du panneau, par exemple une plaque ou feuille en métal, en bois ou en matière plastique ou en tout autre matériau.

Ainsi le document US-A-5 683 782 décrit une structure en nid d'abeilles en polypropylène qui est constituée de petits tubes coextrudés dont le revêtement adhésif est activable par air chaud. Pour coller les tubes ensemble ainsi que pour coller une couche de couverture, on réalise un prétraitement des points de contact de la structure en nid d'abeilles. Ce pré traitement peut être un traitement corona. Ce prétraitement ne vise pas à permettre le collage sur le parement de finition mais à coller les tubes entre eux et à coller un voile intermédiaire sur le dessus.

L'utilisation d'un voile intermédiaire s'avère peu satisfaisante tant au point de vue économique que, pour certaines applications, du point de vue technique.

Le prix du voile et sa mise en oeuvre interviennent négativement sur le coût de l'âme et du panneau en résultant. Ce coût est encore augmenté par la consommation élevée de colle, due en particulier à son absorption par le voile. Sur le plan technique, la présence du voile altère la planéité du panneau fini, en augmente le poids final et peut nuire à sa rigidité dès lors que le voile constitue une couche de glissement dans l'ensemble composite du panneau. Enfin, l'hydrophilie du voile peut parfois constituer un inconvénient supplémentaire pour certaines applications particulières.

La présente invention a en conséquence pour but de proposer une âme en nid d'abeilles en polyoléfine, en particulier en polypropylène, qui ne présente pas les inconvénients des âmes connues et qui ne requiert pas la nécessité d'utiliser un voile intermédiaire thermosoudé pour le collage au parement. Elle a également pour but la réalisation de panneaux composites ou sandwichs à âme en nid d'abeilles en polyoléfine, en particulier en polypropylène, dépourvus de voile d'accrochage et offrant des qualités mécaniques et de tenue dans le temps au moins égales à celles des panneaux composites connus ainsi qu'un procédé de fabrication de tels panneaux composites qui est plus simple et plus économique que les procédés connus.

A cet effet, l'invention a pour objet une âme du type nid d'abeilles en polyoléfine, en particulier en polypropylène, destinée à accueillir par collage, sur au moins l'une de ses faces externes, un parement de finition, caractérisée en ce que ladite âme est collable sur un parement de finition sans interposition d'un voile intermédiaire souple d'accrochage grâce à un traitement d'activation préalable d'au moins une face externe de l'âme, ladite face externe traitée présentant une tension de surface supérieure ou égale à 40 dynes/cm².

Elle concerne également un panneau composite ou sandwich réalisé à partir de cette âme en nid d'abeilles, ladite âme étant revêtue sur au moins une de ses faces externes d'un parement, mais sans interposition de voiles comme dans les panneaux traditionnels de ce type. Elle concerne en outre un procédé pour la fabrication d'un tel panneau, caractérisé en ce qu'on soumet au moins les extrémités ou arêtes des alvéoles de l'âme constituant les faces externes de ladite âme à un traitement d'activation de surface, on dépose une colle sur une face du parement ou directement sur l'âme, puis on applique sous pression la face du parement contre les extrémités ou arêtes des alvéoles de l'âme constituant les faces externes de ladite âme.

De manière surprenante, le traitement d'activation de surface des arêtes libres des alvéoles constituant une face externe de l'âme en nid d'abeilles est suffisant pour conférer à cette âme une capacité d'adhésion directe durable et solide d'un parement par l'action d'une colle.

En effet, si les traitements d'activation de surface sont connus depuis longtemps (voir par exemple EP-A-0 109 344) pour conférer à une surface d'une pièce en polypropylène une capacité d'adhésion sur une surface complémentaire d'une autre pièce, l'utilisation d'un tel traitement à une surface discontinue, constituée en pratique de lignes sécantes comme c'est le cas des faces externes des panneaux du type nid d'abeilles, n'avait pas été envisagée par les hommes de l'art, qui en étaient restés à la technique d'utilisation d'un voile intermédiaire.

Les qualités de l'âme et du panneau composite ou sandwich ainsi obtenus sont optimisées par le choix judicieux du procédé de traitement d'activation de surface, de la colle utilisée, de la pression d'application du parement, etc..

En conséquence, avantageusement, le traitement d'activation de surface est un traitement plasma basse température, en général en atmosphère d'oxygène ou d'azote. La durée du traitement est de préférence supérieure à 1 minute ou inférieure à 10 minutes.

Des essais effectués avec d'autres traitements d'activation de surface, en particulier un flammage, ont donné des résultats satisfaisants mais inférieurs, en terme de qualité du produit fini, à ceux obtenus avec un traitement plasma.

Dans tous les cas, la tension de surface, mesurée avec des encres spécifiques, est supérieure ou égale à 40 dynes/cm², alors que la tension de surface d'une âme non traitée est comprise entre 20 et 30 dynes/cm².

Dans le cas de réalisation d'un panneau composite ou sandwich, la colle est de préférence une colle polyuréthane bi-composant. Avantageusement, le taux d'enduction de colle est compris entre 200 et 500 g/m². Les autres colles habituellement utilisées (époxy, vinylique, acrylique, hot melt, etc..) pour ce type d'application peuvent également convenir, mais avec des résistances généralement plus faibles qui peuvent cependant s'avérer suffisantes pour certaines applications.

La pression d'application des parements encollés peut varier dans des limites relativement larges en fonction principalement de la colle utilisée et de la nature du parement. Elle peut varier entre 0,1 et 10 bar.

L'invention sera mieux comprise à la lecture des résultats d'essais suivants.

Des échantillons d'âmes en nid d'abeilles en polypropylène (marque "Nidacar" 8 de la Société NIDAPLAST-HONEYCOMBS), de 20 mm d'épaisseur et de 300 x 300 mm ont été soumis à un traitement plasma basse température en atmosphère d'oxygène ou en atmosphère d'azote, ou à un traitement par flammage.

Après ce traitement, les âmes sont stockées dans des conditions et pendant des durées variables.

Après stockage, les âmes sont assemblées par collage sur les deux faces, au moyen d'une colle polyuréthane bi-composant, à des parements en aluminium (épaisseur 0,8 mm) ou en contreplaqué (épaisseur 3,3 mm).

Des éprouvettes de dimension 50 x 50 mm sont découpées sur le panneau sandwich obtenu en éliminant les éléments périphériques pour s'affranchir au maximum des effets de bord.

Les essais suivants ont été effectués.

### I) Influence du temps de stockage du panneau sandwich :

L'influence du temps de stockage sur l'adhésion entre les parements et l'âme dans diverses atmosphères a été mesurée jusqu'à 6 mois et à différentes conditions de stockage du panneau sandwich avant son emploi.

La résistance à l'arrachement dans le cas d'un parement aluminium est dans tous les cas supérieure à 8 bar, les ruptures constatées ayant régulièrement lieu dans l'âme.

### II) Influence du vieillissement et des conditions d'utilisation du panneau sandwich

Des éprouvettes au format 300 x 150 et aux chants non protégés, encollées sur des parements aluminium avec 400 gr/m²/face de colle 49 jours après leur traitement, ont été disposées dans une enceinte d'essai de vieillissement climatique sous différents cycles. Les essais de traction sont ensuite effectués sur des séries de 4 éprouvettes prélevées à intervalles réguliers.

De façon surprenante, on constate que les valeurs obtenues lors des essais de résistance à l'arrachement augmentent avec le temps et s'avèrent supérieures à celles obtenues avec un panneau traditionnel, même sous l'action de l'humidité et de la chaleur.

## Revendications

1. Ame du type nid d'abeilles en polyoléfine, en particulier en polypropylène, destinée à accueillir par collage, sur au moins l'une de ses faces externes, un parement de finition,
**caractérisée en ce que** la dite âme est collable sur le parement de finition sans interposition d'un voile intermédiaire souple d'accrochage grâce à un traitement d'activation préalable d'au moins une face externe de l'âme, ladite face présentant une tension de surface supérieure ou égale à 40 dynes/cm².

2. Ame selon la revendication 1,
**caractérisée en ce que** le traitement d'activation de surface est un traitement plasma basse température.

3. Ame selon la revendication 2,
**caractérisée en ce que** le traitement plasma basse température est effectué sous atmosphère d'oxygène ou d'azote.

4. Ame selon l'une des revendications 2 et 3,
**caractérisée en ce que** le traitement plasma basse température est effectué pendant une durée de 1 à 10 minutes.

5. Ame selon la revendication 1,
**caractérisée en ce que** le traitement d'activation de surface est un flammage.

6. Panneau composite ou sandwich comprenant une âme selon l'une des revendications 1 à 5 et au moins un parement collé directement sur une face externe de ladite âme,
**caractérisé en ce que** la colle est une colle polyuréthane bi-composant.

7. Panneau composite ou sandwich selon la revendication 6,
**caractérisée en ce que** le taux d'enduction de colle est compris entre 200 et 500 g/m².

8. Panneau composite ou sandwich selon l'une des revendications 6 et 7,
**caractérisée en ce que** la pression d'application des parements encollés est comprise entre 0,1 et 10 bar.

9. Procédé de fabrication d'un panneau composite ou sandwich à âme en nid d'abeilles en polyoléfine, en particulier en polyuréthane, selon l'une des revendications 6 à 8,
**caractérisé en ce qu'**on soumet au moins les extrémités ou arêtes des alvéoles de l'âme constituant les faces externes de ladite âme à un traitement d'activation de surface, on dépose une colle sur une face du parement ou directement sur l'âme, puis on applique sous pression la face du parement contre les extrémités ou arêtes des alvéoles de l'âme constituant les faces externes de ladite âme.
